(19) Europäisches Patentamt
European Patent Office
Office européen des brevets

(11) **EP 2 250 655 B1**

(12) **FASCICULE DE BREVET EUROPEEN**

(45) Date de publication et mention
de la délivrance du brevet:
**05.10.2016 Bulletin 2016/40**

(21) Numéro de dépôt: **09712744.3**

(22) Date de dépôt: **12.02.2009**

(51) Int Cl.:
*H01G 9/15* *(2006.01)*     *H01G 9/048* *(2006.01)*
*H01G 4/38* *(2006.01)*

(86) Numéro de dépôt international:
**PCT/EP2009/051665**

(87) Numéro de publication internationale:
**WO 2009/103660 (27.08.2009 Gazette 2009/35)**

(54) **SUPERCONDENSATEUR DOUBLE COUCHE MULTIBOBINES**

MEHRSPULEN DOPPELSCHICHTSUPERKONDENSATOR

MULTIPLE-COIL SUPERCAPACITOR

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **19.02.2008 FR 0851056**

(43) Date de publication de la demande:
**17.11.2010 Bulletin 2010/46**

(73) Titulaire: **Blue Solutions**
**29500 Ergué Gabéric (FR)**

(72) Inventeurs:
• **AZAIS, Philippe**
  **F-29000 Quimper (FR)**
• **CAUMONT, Olivier**
  **F-29000 Quimper (FR)**
• **DEPOND, Jean-Michel**
  **F-29000 Quimper (FR)**

(74) Mandataire: **Regimbeau**
**20, rue de Chazelles**
**75847 Paris Cedex 17 (FR)**

(56) Documents cités:
**FR-A- 1 526 673      FR-A- 2 457 004
GB-A- 381 017         GB-A- 909 350
US-A- 4 638 402       US-A1- 2006 221 551
US-A1- 2008 030 924   US-B1- 6 366 445
US-B1- 6 414 838**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne le domaine technique général des supercondensateurs, c'est-à-dire des condensateurs à double couche électrochimique (ou EDLC sigle de l'expression anglo-saxonne « *Electrochemical Double Layer Capacitor »*).

## PRESENTATION GENERALE DE L'ART ANTERIEUR

Un supercondensateur est un moyen de stockage d'énergie permettant d'obtenir une densité de puissance et une densité d'énergie intermédiaire entre celles des condensateurs diélectriques et des batteries. Leur temps de décharge est généralement de l'ordre de quelques secondes.

Un supercondensateur comprend classiquement un élément bobiné cylindrique comprenant au moins deux électrodes. Chaque électrode est fabriquée à partir d'un mélange de charbon actif (également appelé « matière active »), de noir de carbone et de polymères. Lors d'une étape dite d'extrusion, une pâte conductrice est déposée sur un collecteur d'aluminium, qui sert de collecteur de courant. Les deux électrodes sont séparées par un séparateur poreux pour éviter les courts-circuits entre les deux électrodes. Lors d'une étape dite d'imprégnation, le supercondensateur est rempli avec un électrolyte. Cet électrolyte est composé d'un sel dissous dans un solvant, généralement de l'acétonitrile. Ce sel se sépare en deux espèces chargées que l'on appelle des ions (par exemple : BF4- et TEA+).

L'épaisseur d'une électrode est typiquement de $100\mu m$. Les ions ont une taille de l'ordre de 1/1000 de $\mu m$, c'est-à-dire 100 000 fois plus petits que l'épaisseur de l'électrode. Le charbon actif (ou matière active), est un matériau extrêmement poreux.

Lorsque qu'une tension est appliquée avec un générateur continu entre les deux électrodes du supercondensateur, les ions se déplacent dans la porosité au plus près de la surface du charbon. Plus la quantité d'ions présents à la surface du charbon est importante, plus la capacité est importante.

La quantité d'énergie stockée dans un supercondensateur dépend de la tension appliquée entre les deux électrodes et de la capacité totale du supercondensateur.

De nombreux travaux ont montrés que plus la tension de fonctionnement des supercondensateurs est élevée, plus la durée de vie est écourtée, en raison d'une génération très importante de gaz dans le supercondensateur.

Cette génération de gaz est liée à la décomposition du matériau formant l'électrolyte, cette décomposition étant fonction de la tension appliquée entre les électrodes du supercondensateur.

Par exemple, la tension de décomposition de l'acétonitrile pur est de 5.9V.

Actuellement, la tension de référence appliquée aux électrodes des supercondensateurs est de 2.7V (voir notamment WO9815962 qui enseigne à l'homme du métier que la tension d'un supercondensateur doit être limitée pour ne pas trop dégrader l'électrolyte).

Pour remédier à cet inconvénient, il est connu de connecter électriquement plusieurs supercondensateurs les uns aux autres pour former un module. Ceci permet d'augmenter la tension appliquée au module.

Afin de connecter électriquement deux supercondensateurs adjacents, on utilise des moyens de connexion comprenant deux couvercles et une barrette.

Chaque couvercle est apte à coiffer un supercondensateur respectif de sorte à être connecté électriquement à celui-ci, par exemple par soudure.

Chaque couvercle comprend en outre une borne de connexion apte à venir en contact avec un alésage traversant de la barrette, de sorte à relier électriquement les deux supercondensateurs adjacents.

Toutefois, de tels supercondensateurs présentent des inconvénients.

Notamment, le volume et la masse de deux supercondensateurs connectés électriquement par une barrette et deux couvercles sont importants.

Par ailleurs, le coût de fabrication lié à l'achat et au montage des barrettes et des couvercles pour la connexion de deux supercondensateurs est important.

Egalement, la résistance série Rs entre deux supercondensateurs connectés électriquement - qui correspond à la somme des résistances des supercondensateur et des moyens de connexion (barrette + couvercle + soudure) - est importante.

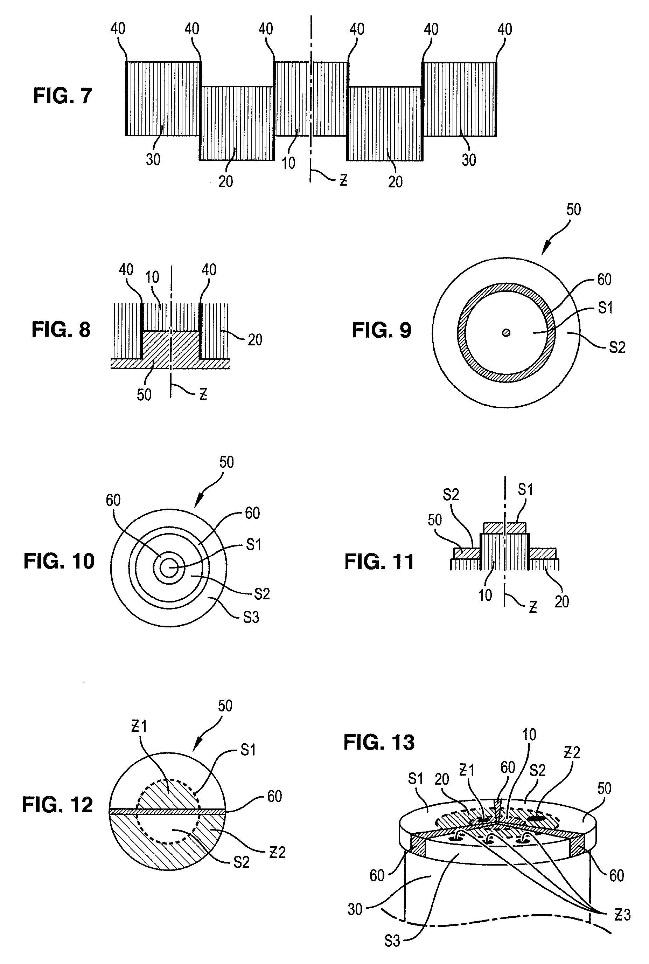

On connaît également, d'après le document US 6414838, un assemblage d'électrodes pour un condensateur à double couche (c'est-à-dire un supercondensateur) qui comprend au moins deux complexes 15, 12 et au moins un séparateur 13, 16 entre les deux complexes, chaque complexe comprenant un collecteur de courant 14, 11 et au moins une électrode e. Les complexes et le séparateur sont enroulés ensemble en spires selon un axe d'enroulement de manière à former un élément bobiné 1. Par ailleurs, dans le mode de réalisation de la figure 10, le supercondensateur décrit comprend au moins un autre complexe, et au moins un autre séparateur, l'autre complexe et l'autre séparateur étant enroulés ensemble en spires autour de l'élément bobiné de manière à former au moins un élément bobiné consécutif.

Toutefois, un tel supercondensateur ne permet pas d'éviter les surtensions et donc sa dégradation potentielle.

Le but général de l'invention est de proposer un supercondensateur dont la durée de vie est augmentée à la tension de référence.

Un autre but de la présente invention est de proposer un supercondensateur dans lequel la génération de gaz est limitée.

Un autre but de la présente invention est de proposer un supercondensateur apte à supporter une tension supérieure à la tension de référence sans subir de dégradation.

## PRESENTATION DE L'INVENTION

A cet effet on prévoit un supercondensateur à double couche électrochimique, comprenant au moins deux électrodes et au moins un séparateur entre les deux complexes, chaque complexe comprenant un collecteur de courant et au moins une électrode, les complexes et le séparateur étant enroulés ensemble en spires selon un axe d'enroulement de manière à former un élément bobiné, ce supercondensateur comprenant en outre au moins un autre complexe et au moins un autre séparateur, l'autre complexe et l'autre séparateur étant enroulés ensemble en spires autour de l'élément bobiné de manière à former au moins un élément bobiné consécutif.

Conformément à l'invention, ces éléments bobinés successifs sont séparés par un espace isolant électronique de largeur d selon une direction perpendiculaire à l'axe d'enroulement.

On appelle « complexe » l'association d'un collecteur de courant et d'au moins une électrode, le collecteur de courant et l'électrode ayant une surface conductrice électriquement en commun.

On appelle « complexes successifs » deux complexes coplanaires (avant l'enroulement en spire pour former un élément bobiné) et séparés lors de leur enroulement par un espace isolant électronique de largueur d.

On appelle « complexe commun » toute association de complexes en continuité électronique.

Le/les séparateur(s) déborde(nt) des électrodes de chaque complexe en regard mais pas des collecteurs des complexes servant de connexion vers l'extérieur.

Des aspects préférés mais non limitatifs du module selon l'invention sont les suivants :

- un complexe du supercondensateur est commun aux deux éléments bobinés successifs,
- le supercondensateur comprend en outre au moins un deuxième autre complexe, les autres complexes et l'autre séparateur étant enroulés ensemble en spires autour de l'élément bobiné de manière à former l'élément bobiné consécutif,
- l'espace isolant électronique est constitué par un frettage formé d'au moins un tour de matériau isolant diélectrique,
- l'espace isolant électronique est constitué par une distance q séparant au moins un des complexes du premier élément bobiné d'au moins un complexe du deuxième élément bobiné,
- la distance q doit être au moins égale à 1 mm,
- les séparateurs sont continus de sorte que le supercondensateur comporte un séparateur unique commun aux différents éléments bobinés et faisant office de frettage entre les différents éléments bobinés,
- la hauteur de chaque élément bobiné est constante,

- les éléments bobinés présentent des hauteurs différentes,
- les éléments bobinés sont décalés les uns par rapport aux autres selon leur axe longitudinal,
- les éléments bobinés sont connectés électriquement par un premier couvercle conducteur sur toute sa surface, ledit couvercle étant disposé sur une des faces de base des éléments bobinés,
- le premier couvercle présente une section transversale crénelée,
- le premier couvercle s'étend sensiblement dans un plan,
- les éléments bobinés sont connectés électriquement par un deuxième couvercle conducteur sur toute sa surface, ledit couvercle étant disposé sur l'autre des faces de base des éléments bobinés de sorte à relier les éléments bobinés en parallèle,
- les éléments bobinés sont connectés électriquement par un deuxième couvercle conducteur comprenant des portions conductrices électriquement, les portions conductrices étant séparées les unes des autres par des portions isolantes électriquement, chaque portion conductrice étant respectivement en contact électrique avec un élément bobiné de sorte à relier en série les éléments bobinés,
- une des portions conductrices électriquement est en forme de disque, et les autres portions conductrices électriquement sont en forme de couronne, les portions conductrices étant séparées les unes des autres par des portions isolantes électriquement en forme de couronne,
- le deuxième couvercle s'étend globalement dans un plan,
- le deuxième couvercle présente une section transversale crénelée,
- chaque portion conductrice est en forme de portion de disque, les portions de disques étant séparées les unes des autres par des portions isolantes radiales,
- la hauteur du frettage est comprise entre la hauteur de matière active du premier élément bobiné et la hauteur totale dudit premier élément bobiné,
- les électrodes des éléments bobinés sont de longueurs différentes,

L'invention concerne également un module comprenant un boîtier dans lequel est disposé au moins un supercondensateur tel que décrit ci-dessus.

## PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :

- les figures 1a à 7 illustrent différents modes de réalisation d'éléments bobinés d'un supercondensateur selon l'invention,

- les figures 8 à 13 illustrent différents modes de réalisation de couvercles du supercondensateur selon l'invention,
- les figures 14, 15 et 16 illustrent respectivement un mode de réalisation de barrette de connexion pour la connexion de supercondensateurs adjacents, conforme à l'invention et deux autres exemples ne faisant pas partie de l'invention,
- la figure 17 illustre un supercondensateur de l'art antérieur,
- les figures 18 à 20 sont des représentations graphiques représentant le volume V d'un supercondensateur en fonction du nombre d'éléments bobinés,
- les figures 21 à 23 sont des représentations graphiques représentant la masse m d'un supercondensateur en fonction du nombre d'éléments bobinés,
- Les figures 24 à 28 illustrent différents montages électriques réalisables avec des supercondensateurs selon l'invention.

## DESCRIPTION DE L'INVENTION

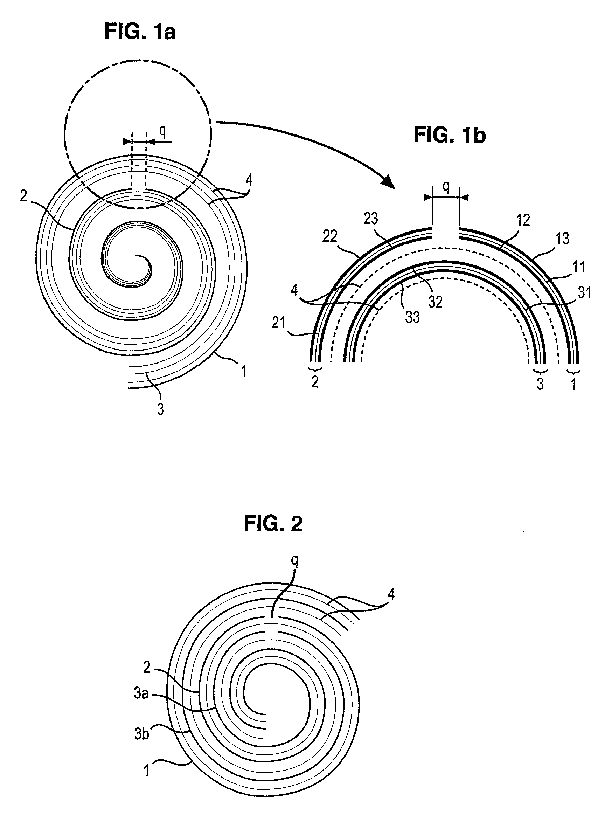

On va maintenant décrire différents modes de réalisation du supercondensateur selon l'invention en référence aux figures 1 à 23. Dans ces différentes figures, les éléments équivalents du supercondensateur portent les mêmes références numériques.

En référence aux figures 1 a et 1 b, on a illustré une vue en coupe selon un axe transversal d'un premier mode de réalisation du supercondensateur.

Le supercondensateur comprend deux complexes 2, 3 disposés face à face et séparés par un séparateur 4.

Les complexes 2, 3 et le séparateur 4 sont enroulés ensemble en spire pour former un premier élément bobiné.

Le supercondensateur comprend également un autre complexe 1 successif à l'un 2 des complexes 2, 3 et un autre séparateur 4. L'autre électrode et l'autre séparateur sont enroulés ensemble en spires autour du premier élément bobiné de manière à former au moins un deuxième élément bobiné consécutif.

Les complexes successifs 1, 2 sont espacés d'une distance q selon une direction circonférentielle à l'axe longitudinal du supercondensateur.

Avantageusement, la distance q entre les complexes successifs 1, 2 est prévue suffisante pour isoler électriquement les complexes successifs 1, 2 l'un de l'autre. Dans le mode de réalisation illustré à la figure 1, la distance q est supérieure ou égale à 1 millimètre.

Une distance q de un millimètre est en effet suffisante pour éviter que le champ électrique créé entre les deux complexes successifs 1, 2 soit trop important, ce qui risquerait de décomposer l'électrolyte dans des conditions normales d'utilisation du supercondensateur.

Le complexe 3 disposé en regard des deux complexes successifs est dit *« complexe commun »*.

Les séparateurs 4 permettent d'isoler électriquement les complexes successifs 1, 2 du complexe commun 3. L'un des séparateurs est disposé entre le complexe commun 3 et les complexes successifs 1,2. L'autre séparateur 4 est disposé sur l'autre face du complexe commun 3 de sorte que le complexe commun 3 est situé entre les séparateurs 4.

Chaque complexe 1, 2, 3 comprend un collecteur de courant 11, 21, 31 et au moins une électrode composée de matière active, l'électrode ayant une face électriquement conductrice en commun avec le collecteur de courant 11, 21, 31.

Dans le mode de réalisation illustré aux figures 1 a et 1 b, chaque complexe 1, 2, 3 comprend deux électrodes 12, 13, 22, 23, 32, 33 opposées de part et d'autre du collecteur de courant 11, 21, 31. Chaque électrode 12, 13, 22, 23, 32, 33 a une surface conductrice électriquement en commun avec une face respective du collecteur de courant 11, 21, 31.

Les zones en regard des complexes successifs et communs définissent deux cellules de supercondensateur dont les capacités sont déterminées par leurs longueurs respectives. La continuité du complexe commun 3 permet la mise en série des deux cellules de supercondensateur.

Les complexes 1, 2, 3 et séparateurs 4 sont respectivement constitués d'une ou plusieurs feuilles superposées.

Avantageusement, les complexes successifs 1, 2, le complexe commun 3 et les séparateurs 4 sont successivement enroulés ensemble en spire pour former un premier élément bobiné et un deuxième élément bobiné consécutifs.

La solution proposée est moins coûteuse que les supercondensateurs de l'art antérieur décrits précédemment. En effet, le nombre de barrettes, de couvercles, et de tubes (servant de logement aux éléments bobinés) pour connecter électriquement deux cellules de supercondensateur est inférieur au nombre de barrettes, de couvercles et de tubes nécessaire pour la connexion électrique de plusieurs supercondensateurs de l'art antérieur.

Par ailleurs, la solution proposée ci-dessus permet de diminuer la résistance série Rs du système (par la diminution du nombre de couvercles et barrettes nécessaires pour connecter les cellules de supercondensateur par rapport au nombre de couvercles et de barrettes nécessaires pour connecter des supercondensateurs de l'art antérieur), et d'augmenter de façon importante l'énergie admissible par unité de volume tout en optimisant la capacité.

Le supercondensateur décrit ci-dessus permet ainsi d'obtenir une structure compacte bobinée :

- permettant des connexions électriques en série ou en parallèle de cellules de supercondensateur de capacité identiques C, ou de capacités différentes C, C' fonctionnant à la même tension d'alimentation Un dans le but d'accroitre les courants et/ou tension globales de la structure compacte,

- répondant à des impératifs particuliers d'équilibrage en application (montage triangle ou étoile de cellules de supercondensateur de capacités quelconques fonctionnant à des tensions quelconques),
- autorisant l'optimisation des densités volumiques et massiques d'énergie et de puissance d'assemblages de cellules de supercondensateur de capacité identiques C fonctionnant à la même tension Un.

D'autres avantages liés à l'élimination des barrettes et couvercles pour connecter deux cellules de supercondensateur en série/parallèle sont les suivants

- diminution du volume du supercondensateur
- diminution de masse par rapport à deux supercondensateurs de l'art antérieur connectés en série,
- diminution du volume de deux supercondensateurs connectés en série/parallèle : le double du volume d'un supercondensateur de l'art antérieur (obtenus en enroulant ensemble en spire deux complexes et un séparateur) est supérieur au volume d'un supercondensateur selon l'invention (obtenu en enroulant ensemble en spire trois complexes et deux séparateurs) tel qu'illustré à la figure 1, donc
- accroissement des densités volumiques et massiques des énergies et des puissances,
- Non diminution du volume libre interne par rapport à une association série de supercondensateurs de l'art antérieur (standards),
- Gain de temps d'un point de vue procédé de fabrication (n cellules dans 1 seul supercondensateur) par une simplification du procédé de fabrication, car bobinage unique, imprégnation unique, traitement thermique unique et soudage unique.

En référence à la figure 2, on a illustré un autre mode de réalisation du supercondensateur selon l'invention.

Le supercondensateur illustré à la figure 2 diffère du supercondensateur illustré à la figure 1 en ce qu'il comprend quatre complexes au lieu de trois.

Deux premiers complexes 2, 3a sont disposés face à face. L'un 2 des deux premiers complexes est disposé entre deux séparateurs 4. Les deux premiers complexes 2, 3a et les séparateurs 4 sont enroulés ensemble en spire pour former un premier élément bobiné.

Deux autres complexes 1, 3b sont successifs aux deux premiers complexes 2, 3a et espacés (des deux premier complexes) d'une distance q selon une direction circonférentielle au supercondensateur.

Les deux complexes 1, 3b sont enroulés ensemble en spire autour du premier élément bobiné constitué des complexes 2, 3a de manière à former au moins un deuxième élément bobiné consécutif.

Dans ce mode de réalisation, chaque élément bobiné forme un supercondensateur indépendant. La liaison électrique en série ou en parallèle des deux supercondensateurs ainsi formés est assurée par des couvercles 50, comme il sera expliqué plus en détail dans la suite.

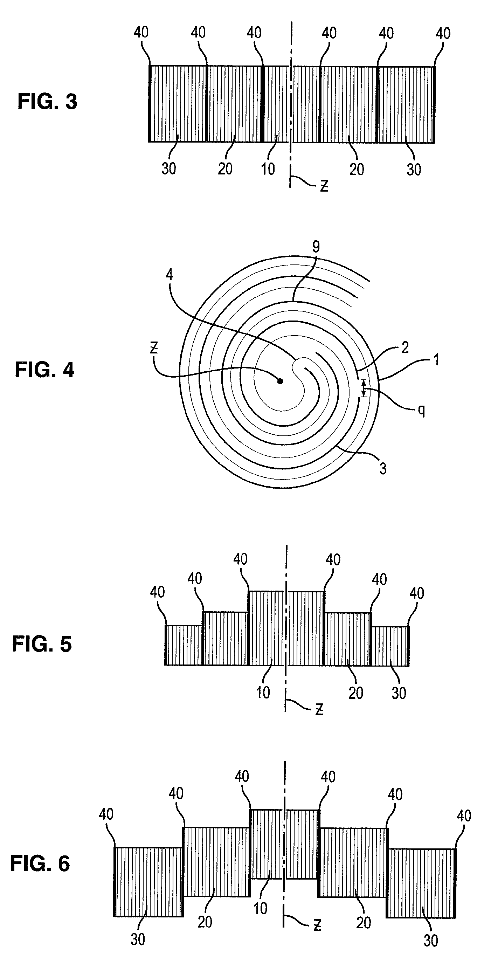

On a représenté à la figure 3 différents éléments bobinés 10, 20, 30 d'un supercondensateur selon l'invention. Les éléments bobinés successifs 10, 20, 30 sont coaxiaux d'axe Z. Ces éléments bobinés 10, 20, 30 successifs sont séparés par un espace isolant électronique. Cette espace isolant électronique permet d'isoler les éléments bobinés les uns des autres.

Selon une variante de réalisation, l'espace isolant électronique est constitué par une distance q séparant deux éléments bobinés successifs. Avantageusement, cette distance q est prévue suffisante pour éviter le passage direct du courant entre deux éléments bobinés successifs. Par exemple, la distance q peut être supérieure à un millimètre.

Selon une autre variante de réalisation, l'espace isolant électronique peut être constitué par un frettage 40 formé d'au moins un tour de matériau isolant diélectrique. L'utilisation d'un frettage pour séparer électriquement deux éléments bobinés successifs facilite la fabrication du supercondensateur.

Avantageusement, la hauteur du frettage est comprise entre la hauteur de matière active du premier élément bobiné et la hauteur totale dudit premier élément bobiné

Comme illustré à la figure 4, les séparateurs 4 peuvent être continus de sorte que le supercondensateur comporte un séparateur unique commun 4 aux différents éléments bobinés et faisant office de frettage entre les éléments bobinés successifs.

Dans le mode de réalisation illustré à la figure 3, les différents éléments bobinés 10, 20, 30 sont de hauteur constante. Par ailleurs, les bases des différents éléments bobinés 10, 20, 30 sont coplanaires. Ceci permet de faciliter l'enroulement des éléments bobinés successifs.

Dans d'autres modes de réalisation tel qu'illustré à la figure 5, les éléments bobinés successifs 10, 20, 30 sont de hauteur différentes, les éléments bobinés successifs ayant une base coplanaire.

Dans d'autre modes de réalisation encore, les éléments bobinés successifs 10, 20, 30 sont de hauteur identique, mais leurs bases sont décalés les unes par rapport aux autres selon leur axe longitudinal. De tels modes de réalisation sont illustrés aux figures 6 et 7.

Dans le mode de réalisation de la figure 6, les éléments bobinés successifs 10, 20, 30 sont emboités les uns dans les autres. En d'autres termes les éléments bobinés successifs sont coaxiaux et empilés autour de l'élément bobiné central 10.

Dans le mode de réalisation illustré à la figure 7, les éléments bobinés successifs 10, 20, 30 sont décalés les uns par rapport aux autres de sorte que leurs bases forment un créneau selon une vue en coupe longitudinale.

Les éléments bobinés successifs du supercondensateur sont destinés à être connectés ensemble ou avec des éléments bobinés d'autres supercondensateurs adjacents par l'intermédiaire de couvercles 50 et/ou de barrettes.

On va maintenant décrire plus en détail les différents types de couvercles 50 pouvant être utilisés pour connecter entre eux les éléments bobiné d'un supercondensateur ou de différents supercondensateurs adjacents.

En référence à la figure 8, on a illustré un premier mode de réalisation d'un couvercle 50 permettant la connexion électrique de deux éléments bobinés d'un même supercondensateur. Le couvercle 50 présente une section transversale crénelée.

Ce premier mode de réalisation de couvercle 50 est destiné à venir coiffer un supercondensateur dont les éléments bobinés présentent des bases décalées les unes par rapport aux autres. Pour relier électriquement des éléments bobinés de hauteur identique non décalés les uns par rapport aux autres (tels que représentés à la figure 5), on utilisera un couvercle 50 s'étendant sensiblement dans un plan.

Avantageusement, le couvercle 50 est conducteur sur toute sa surface, et permet la mise en contact électrique des éléments bobinés successifs d'un supercondensateur de sorte à former une borne commune pour ces éléments bobinés.

L'autre face du supercondensateur peut être coiffée d'un couvercle 50 conducteur sur toute sa surface de sorte à relier électriquement en parallèle les éléments bobinés successifs du supercondensateur.

L'autre face du supercondensateur peut également être coiffée d'un couvercle 50 comprenant des portions conductrices électriquement, les portions conductrices étant séparées les unes des autres par des portions isolantes électriquement, chaque portion électriquement conductrice étant respectivement en contact électrique avec un élément bobiné de sorte à relier en série les éléments bobinés.

On a illustré aux figures 9 et 10 des modes de réalisation de couvercles comprenant des portions électriquement conductrices destinées à venir respectivement en contact électrique avec un des éléments bobinés.

Dans le mode de réalisation illustré à la figure 9, le couvercle comprend deux portions électriquement conductrices. La première portion conductrice électriquement S1 est en forme de disque. La deuxième portion conductrice électriquement S2 est en forme de couronne. Les portions conductrices électriquement S1, S2 sont séparées les unes des autres par des portions isolantes électriquement 60 en forme de couronne. Ce couvercle 50 est destiné à venir coiffer un supercondensateur comprenant deux éléments bobinés successifs. La première portion conductrice électriquement S1 est connectée électriquement à l'élément bobiné central 10 du supercondensateur. La deuxième portion conductrice électriquement S2 est connectée électriquement à l'élément bobiné périphérique 20 du supercondensateur.

Dans le mode de réalisation illustré à la figure 10, le couvercle 50 comprend trois portions conductrices électriquement S1, S2, S3. Une des portions conductrices électriquement S1 est en forme de disque. Les autres portions conductrices électriquement S2, S3 sont en forme de couronne. Les portions conductrices électriquement S1, S2, S3 sont séparées les unes des autres par des portions isolantes électriquement 60 en forme de couronne. Les portions électriquement conductrices S1, S2, S3 sont connectées électriquement à un élément bobiné 10, 20, 30 respectif. Ce couvercle 50 est destiné à venir coiffer un supercondensateur comprenant trois éléments bobinés successifs.

Bien entendu, le couvercle 50 peut comprendre plus de trois portions électriquement conductrices, le nombre de portion conductrice étant fonction du nombre d'éléments bobinés du supercondensateur.

Selon l'application, le couvercle 50 peut s'étendre sensiblement dans un plan, ou présenter une section transversale crénelée tel qu'illustré à la figure 11.

Par ailleurs, les portions électriquement conductrices peuvent avoir d'autres formes. On a illustré aux figures 12 et 13 des couvercles 50 dans lesquels les portions électriquement conductrices sont respectivement en forme de portion de disque. Les portions de disques sont séparées les unes des autres par des portions isolantes radiales.

Dans le mode de réalisation illustré à la figure 12, le couvercle 50 comprend deux portions électriquement conductrices S1, S2 en forme de demi-disque. Chaque portion S1 (respectivement S2) est destinée à être connecté électriquement à un élément bobiné respectif 10 (respectivement 20) du supercondensateur dans une zone Z1 (respectivement Z2) de chaque portion S1 (respectivement S2). Ce couvercle 50 est destiné à venir coiffer un supercondensateur comprenant deux éléments bobinés.

Dans le mode de réalisation illustré à la figure 13, le couvercle 50 comprend trois portions électriquement conductrices S1, S2, S3 en forme de tiers de disque. Chaque portion S1 (respectivement S2, respectivement S3) est connectée électriquement à un élément bobiné respectif 10 (respectivement 20, respectivement 30) du supercondensateur au niveau de soudures Z1 (respectivement Z2, respectivement Z3). Ce couvercle 50 est destiné à venir coiffer un supercondensateur comprenant trois éléments bobinés 10, 20, 30.

Une fois le supercondensateur coiffé de l'un des couvercles 50 décrits précédemment en référence aux figures 9 à 13, le supercondensateur peut être connecté à un (ou des) supercondensateur(s) adjacent(s) en utilisant des barrettes de connexion électriquement conductrices.

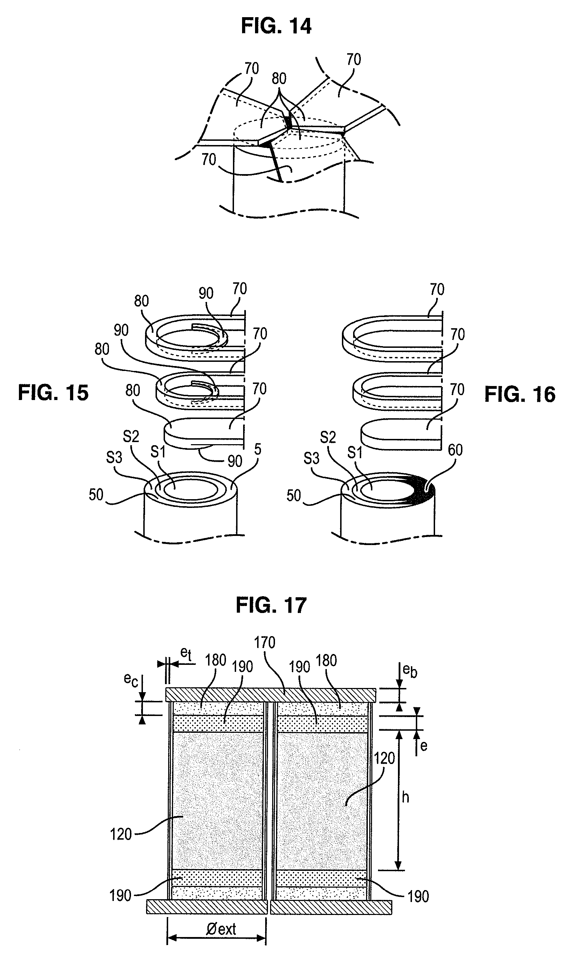

En référence à la figure 14, on a illustré un exemple de barrette de connexion 70 qui ne fait pas partie de l'invention. Chaque barrette de connexion 70 comprend une partie électriquement conductrice destinée à venir en contact respectivement avec une portion conductrice S1, S2, S3 en forme de disque du couvercle 50 décrit en référence à la figure 13.

Plus spécifiquement, chaque barrette 70 est sensiblement plate. Le corps principal de la barrette de connexion 70 est rectangulaire. Les extrémités 80 de la barrette sont de forme triangulaire. La taille et la forme de ces extrémité 80 est prévue suffisante pour venir en contact avec une portion conductrice S1, S2, S3 respective du couvercle 50, sans recouvrir la partie isolante séparant deux portions conductrices du couvercle 50. Ainsi, les barrettes de connexion 70 sont isolées les unes des autres. En évitant le contact entre les barrettes 70, on garanti l'isolation électriques des barrettes 70 de sorte à éviter un court-circuit.

En référence à la figure 15, on a illustré une variante de barrette de connexion 70 qui ne fait pas partie de l'invention. Cette barrette de connexion 70 permet la connexion électrique de deux supercondensateurs du type décrit en référence aux figures 9 et 10.

La barrette de connexion 70 comprend deux (ou plus de deux) parties électriquement conductrices isolées l'une de l'autre (respectivement les unes des autres) par une (ou plusieurs) partie(s) isolante(s) électriquement. Chaque partie électriquement conductrice est destinée à venir en contact respectivement avec une portion conductrice S1, S2, S3 du couvercle 50. Chaque partie électriquement conductrice comprend un élément de connexion 90 faisant saillie aux extrémités 80 de la barrette de connexion 70. Chacun de ces éléments 90 faisant saillie est destiné à venir en contact avec une portion conductrice S1, S2, S3 respective du couvercle 50.

En référence à la figure 16, un autre exemple de réalisation de barrette de connexion 70 et de couvercle est illustré. Il ne fait pas partie de l'invention. Cette barrette de connexion 70 et ce couvercle sont adaptés à la connexion de deux supercondensateurs comprenant chacun trois éléments bobinés. Bien entendu, ce couvercle et cette barrette peuvent comprendre plus de trois portions électriquement conductrices dans le cas où les supercondensateurs comprennent plus de trois éléments bobinés.

La barrette de connexion 70 est sensiblement plate. Le couvercle comprend des zones électriquement isolantes s'étendant à la surface de contact entre le couvercle et la barrette. Ces zones électriquement isolantes sont disposées de sorte que chaque partie conductrice de la barrette est en contact électriquement avec une seule portion conductrice du couvercle. Ceci permet de connecter électriquement deux à deux les éléments bobinés des supercondensateurs ainsi reliés.

Avantageusement, le supercondensateur peut être dissymétrique, c'est-à-dire que les électrodes des différents complexes peuvent être différentes en termes de longueur.

Le fait de travailler avec un supercondensateur dissymétrique permet d'optimiser :

- la capacité du supercondensateur d'une part, et
- le vieillissement du supercondensateur d'autre part, en raison d'un meilleur contrôle du potentiel de chaque électrode.

La dissymétrie du supercondensateur peut être obtenue par exemple en faisant varier l'épaisseur des électrodes des éléments bobinés, de sorte que les électrodes positives et négatives de chaque élément bobiné aient des volumes différents.

La dissymétrie du supercondensateur peut également être obtenue en faisant varier les épaisseurs et/ou longueurs des électrodes des éléments bobinés.

La dissymétrie peut également être obtenue en faisant varier la nature des constituants des électrodes des éléments bobinés. Par exemple, dans un mode de réalisation, les électrodes d'un élément bobiné sont d'épaisseur identique mais sont constituées de matériaux différents de sorte à présenter des densités faradiques différentes.

Les supercondensateurs peuvent avoir différentes formes. Par exemple, les supercondensateurs peuvent être cylindriques.

**Cas général permettant de démontrer le gain de volume sur un système cobobiné**

Comme décrit précédemment, le supercondensateur selon l'invention permet de réduire le volume associé à la connexion électrique en série ou en parallèle de deux supercondensateurs par rapport aux modules de l'art antérieur.

Un tel module de l'art antérieur est illustré à la figure 17. Le module comprend deux supercondensateurs 120. Chaque supercondensateur 120 comprend un élément bobiné cylindrique comprenant deux électrodes et un séparateur. Une portion 190 des électrodes déborde vers l'extérieur. Les supercondensateurs sont connectés en série au moyen d'une barrette 170 de liaison et de couvercles 180. Chaque couvercle 180 coiffe un supercondensateur 120 respectif de sorte à être connecté électriquement à celui-ci au niveau de la portion 190 d'électrode débordant vers l'extérieur. Chaque couvercle 180 est en contact par soudage avec une barrette 70, de sorte à relier électriquement en série les deux supercondensateurs 120.

Pour démontrer le gain de volume du supercondensateur selon l'invention par rapport au module de l'art antérieur, les paramètres suivants sont nécessaires

C : capacité à obtenir (F)
$\xi$ : densité faradique (F/cm$^3$)
h : hauteur activé (cm)
H : hauteur totale (cm)
e : épaisseur du sandwich bobiné Séparateur / Electrode / Collecteur / Electrode / Séparateur / Electrode / Collecteur / Electrode (cm)

$\emptyset_{int}$ : diamètre intérieur autour duquel commence le bobinage ($\emptyset_{int} > 0$) (cm)

Les données de sortie sont les suivantes :

k : nombre de tours

$\emptyset_{ext}$ : diamètre extérieur d'un bobinage de capacité C comprenant k tours (cm)

$C_n$ : capacité de n bobinages emboités en parallèle (F)

$\emptyset_{ext\,n}$ : diamètre extérieur de la capacité $C_n$ (cm)

$V_n$ : volume de la capacité n-emboîtée de valeur $C_n$ (cm$^3$)

V : volume de n capacités de valeur C en parallèle (cm$^3$)

<u>Formules :</u>

$$C = \xi \, \frac{h\,e}{2} \, \pi \, k \, (\emptyset_{int} + k\,e)$$

$$\emptyset_{ext} = \emptyset_{int} + 2\,k\,e$$

$$k = \frac{-\emptyset_{int} + \sqrt{\emptyset_{int}{}^2 + \dfrac{8C}{\xi \pi h}}}{2e}$$

$$\emptyset_{ext} = \sqrt{\emptyset_{int}{}^2 + \frac{8C}{\xi \pi h}}$$

$$C_n = n\,C$$

$$V_n = \emptyset_{ext\,n}{}^2\,H = \left(\emptyset_{int}{}^2 + \frac{8nC}{\xi \pi h}\right)H$$

$$V = n\,\emptyset_{ext}{}^2\,H = n\left(\emptyset_{int}{}^2 + \frac{8C}{\xi \pi h}\right)H$$

**Application numérique des formules établies précédemment :**

Dans la suite des exemples numériques, la valeur de capacité de chaque enroulement est prise comme identique, ce qui signifie en pratique que les enroulements de plus grands diamètres ont une épaisseur plus faible que les enroulements de plus faibles diamètres, la longueur d'enroulement étant identique pour chaque capacité.

### *Exemple numérique 1*

C = 600 F $\xi$ = 30 F/cm$^3$ h = 8 cm H = 10 cm
e = 0.05 cm $\emptyset_{int}$ = 2.5 cm

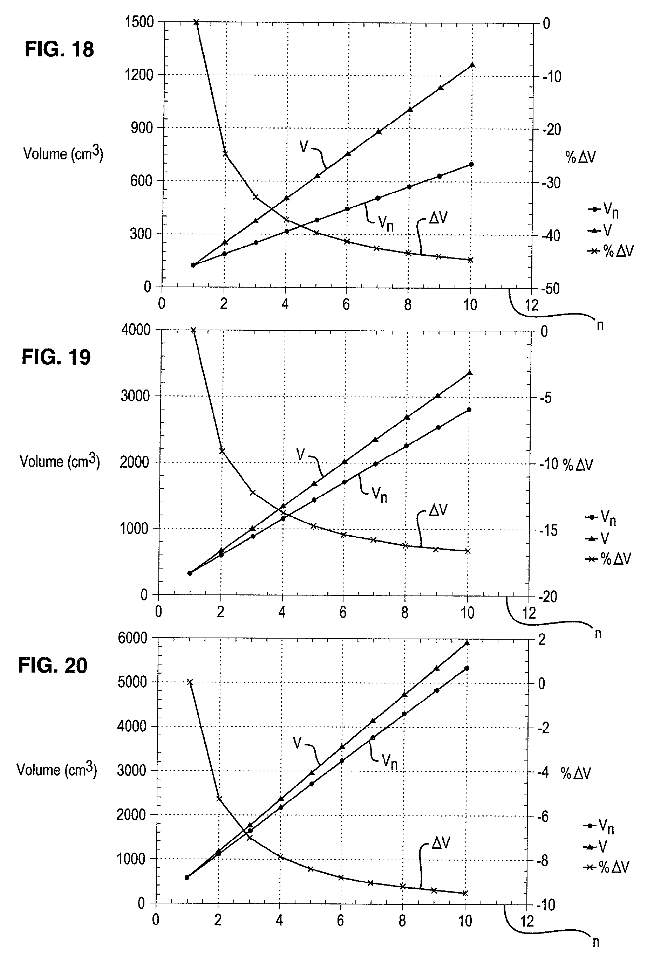

La figure 18 montre le volume V de n éléments bobinés associés en module et l'équivalent d'un seul supercondensateur selon l'invention contenant n éléments cobobinés $V_n$. Les volumes sont exprimés en cm$^3$ (ordonnées à gauche). %ΔV représente le gain en pourcent entre un élément cobobiné et des éléments associés (axe des ordonnées à droite).

### *Exemple numérique 2*

C = 2600 F $\xi$ = 30 F/cm$^3$ h = 8 cm H = 10 cm
e = 0.05 cm $\emptyset_{int}$ = 2.5 cm

La figure 19 montre le volume V de n éléments bobinés associés en module et l'équivalent d'un seul supercondensateur selon l'invention contenant n éléments cobobinés $V_n$. Les volumes sont exprimés en cm$^3$ (ordonnées à gauche). %ΔV représente le gain en pourcent entre un élément cobobiné et des éléments associés (axe des ordonnées à droite).

### *Exemple numérique 3*

C = 5000 F     $\xi$ = 30 F/cm$^3$     h = 8 cm     H = 10 cm
e = 0.05 cm     $\emptyset_{int}$ = 2.5 cm

La figure 20 montre le volume V de n éléments bobinés associés en module et l'équivalent d'un seul supercondensateur selon l'invention contenant n éléments cobobinés $V_n$. Les volumes sont exprimés en cm$^3$ (ordonnées à gauche). %ΔV représente le gain en pourcent entre un élément cobobiné et des éléments associés (axe des ordonnées à droite).

**Résultat :**

Les figures 18, 19, 20 montrent que le gain en volume est obtenu quelque soit le nombre d'éléments cobobinés et quelque soit la capacité initiale utilisée.

**Cas général permettant de démontrer le gain de masse sur un système cobobiné**

Comme décrit précédemment, le supercondensateur selon l'invention permet de réduire la masse associée à la connexion électrique en série ou en parallèle de deux supercondensateurs par rapport aux modules de l'art antérieur.

Pour démontrer le gain de masse du supercondensateur selon l'invention par rapport au module de l'art antérieur, les paramètres suivants sont nécessaires

$e_c$ : épaisseur du couvercle (cm)
et : épaisseur du tube (cm)
$m_u^C$ : masse de la capacité C (g)
d : masse volumique de la matière du tube et du couvercle (g/cm$^3$)

Les données de sortie sont les suivantes :

$m_c^C$ : masse du couvercle d'une capacité de valeur C (g)
$m_t^C$ : masse du tube d'une capacité de valeur C (g)
m : masse totale de n capacités de valeur C en parallèle (g)
$m_n$ : masse totale de la capacité n-emboîtée de valeur $C_n$ (g)

**Formules :**

$$m_c^C = \pi \, \varnothing_{ext}^2 \, e_c \, d$$

$$m_t^C = \pi \, \varnothing_{ext} \, e_t \, H \, d$$

$$m = n \, (m_u^C + 2 \, m_c^C + m_t^C)$$

$$m_n = m_u^{Cn} + 2 m_c^{Cn} + m_t^{Cn}$$

**Application numérique des formules établies précédemment :**

$e_c$ = 0.4 cm et = 0.05 cm
d (masse volumique de l'aluminium) = 2.7 g/cm$^3$
$m_u^{600F}$ = 75 g $m_u^{2600F}$ = 325 g

*Exemple numérique 1*

$e_c$ = 0.4 cm et = 0.05 cm
d (masse volumique de l'aluminium) = 2.7 g/cm$^3$
$m_u^{600F}$ = 75 g

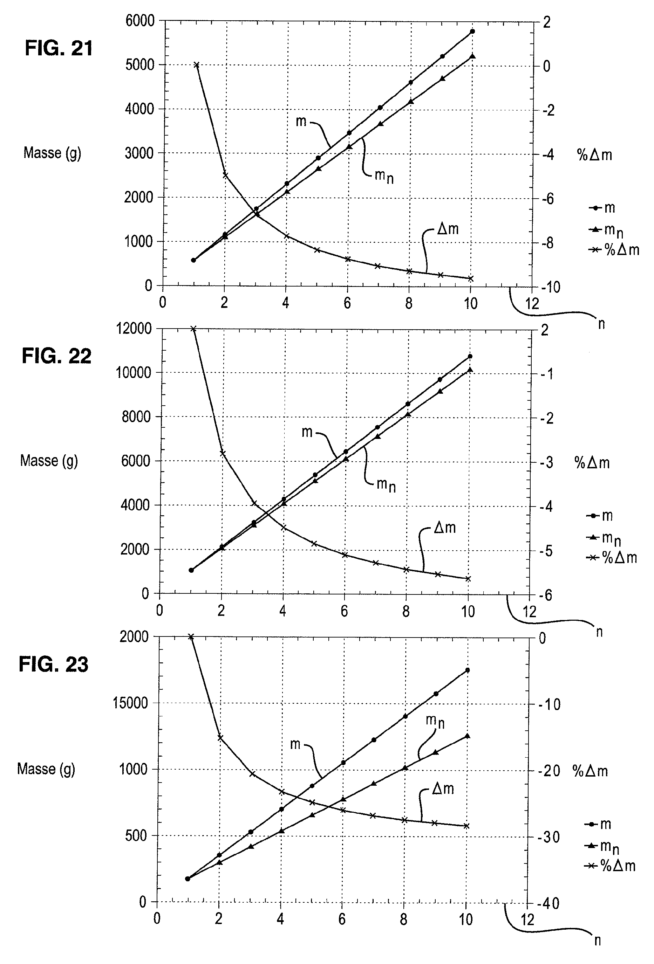

La figure 21 montre la masse m de n éléments bobinés associés en module et l'équivalent d'un seul supercondensateur selon l'invention contenant n éléments cobobinés $m_n$. Les masses sont exprimées en gramme (ordonnées à gauche). %$\Delta$m représente le gain de masse en pourcent entre un élément cobobiné et des éléments associés (axe des ordonnées à droite).

*Exemple numérique 2*

$e_c$ = 0.4 cm et = 0.05 cm
d (masse volumique de l'aluminium) = 2.7 g/cm$^3$
$m_u^{2600F}$ = 325 g

La figure 22 montre la masse m de n éléments bobinés associés en module et l'équivalent d'un seul supercondensateur selon l'invention contenant n éléments cobobinés $m_n$. Les masses sont exprimées en gramme (ordonnées à gauche). %$\Delta$m représente le gain de masse en pourcent entre un élément cobobiné et des éléments associés (axe des ordonnées à droite).

*Exemple numérique 3*

$e_c$ = 0.4 cm et = 0.05 cm
d (masse volumique de l'aluminium) = 2.7 g/cm$^3$
$m_u^{5000F}$ = 650 g

La figure 23 montre la masse m de n éléments associés en module et l'équivalent d'un seul supercondensateur selon l'invention contenant n éléments cobobinés $m_n$. Les masses sont exprimées en gramme (ordonnées à gauche). %$\Delta$m représente le gain de masse en pourcent entre un élément cobobiné et des éléments associés (axe des ordonnées à droite).

**Résultat :**

Les figures 21, 22, 23 montrent que le gain en masse est obtenu quelque soit le nombre d'éléments cobobinés et quelque soit la capacité initiale utilisée. Ce gain en masse ne tient pas compte du gain conséquent en termes de connectique extra-éléments (barrettes de connexion, couvercle, etc.), ce qui accroit encore le gain réalisé en termes de masse.

**Conclusion :**

Quelque soit le nombre d'éléments cobobinés, le gain simultané en masse et en volume existe par rapport à un assemblage série ou parallèle de plusieurs éléments bobinés tel que proposé dans l'art antérieur.

Ce nouveau système correspond donc à un accroissement significatif de la densité d'énergie volumique et massique.

Il est important de préciser que la masse de chaque électrode, l'épaisseur de l'enduit, du collecteur, le type de carbone et la largeur de laize peuvent être différents, comme le montrent les différents schémas descriptifs.

Dans les exemples que nous avons cités, nous avons pris les cas les plus simples, mais ils pourraient aisément être multipliés à l'envi. Quelque soit le type d'arrangement, le gain de masse et de volume est visé de manière avantageuse. Ce gain peut également se faire en termes de tension, selon des arrangements du type décrit dans la figure 8.

Chaque électrode peut être symétrique (cas le plus simple et généralement appliqué) par rapport un collecteur propre de façon à doubler la quantité de matière active de la capacité ainsi formée et à augmenter de façon drastique la capacité volumique de l'ensemble, et donc l'énergie maximale admissible. Le cas de la dissymétrie ne doit pas être écarté :

- cas d'enroulements de capacités différentes dans le même élément,
- cas de matières actives différentes (par exemple porosité de carbones différents)
- combinaison de cobobinages multipistes, c'est à dire un supercondensateur, tel qu'il comprend au moins deux complexes juxtaposés espacés d'une distance d et au moins un complexe commun en regard des deux complexes juxtaposés et séparé de ceux-ci par au moins un séparateur, le séparateur et les complexes étant enroulées ensemble en spire pour former un élément bobiné (faisant l'objet d'une demande de brevet séparée) avec le multibobines, objet de la présente demande.

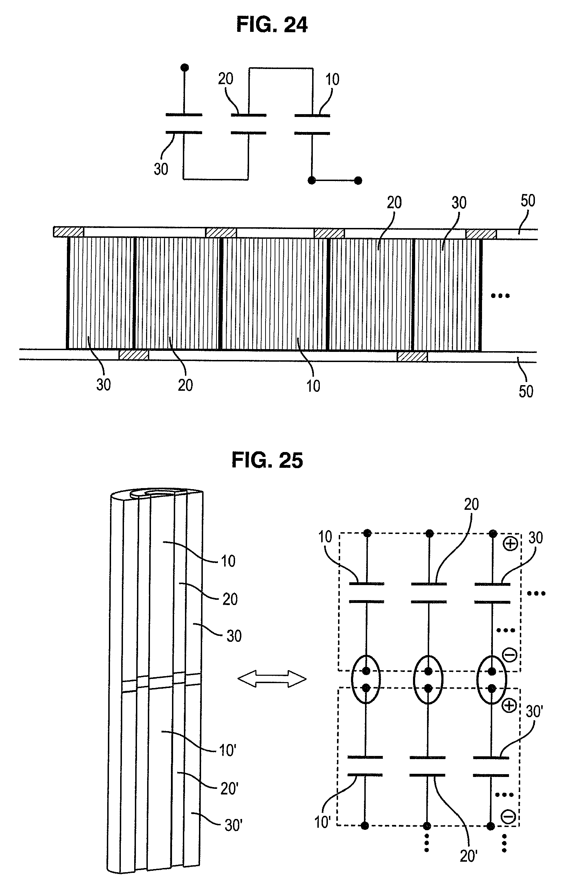

On a illustré aux figures 24 à 28 différents exemples de montages réalisables avec le supercondensateur selon l'invention.

En référence à la figure 24, on a illustré un exemple de montage dans lequel la succession d'éléments bobinés 10, 20, 30 (constituant chacun un supercondensateur) connectés en série grâce à un type de couvercle particulier comprenant différentes zone conductrice et isolante permet d'obtenir une connexion électrique en série des différents éléments bobinés.

En référence à la figure 25, on a illustré un autre exemple de montage dans lequel chaque élément bobiné 10, 20, 30 d'un premier supercondensateur est connecté en série à un élément bobiné 10', 20', 30' d'un autre supercondensateur, les différents éléments bobinés du premier supercondensateur étant connecté en parallèle.

Plus spécifiquement, les bases de chaque supercondensateur sont coiffées de couvercles (du type illustré à la figure 10) comprenant trois portions conductrices électriquement S1, S2, S3 (S1 en forme de disque et S2n S3 en forme de couronne) séparées les unes des autres par des portions électriquement isolantes 60 (en forme de couronne). Les deux supercondensateurs sont ensuite empilés de sorte que :

- l'élément bobiné central 10 du premier supercondensateur est connecté en série à l'élément bobiné central 10' du deuxième supercondensateur
- l'élément bobiné périphérique 30 du premier supercondensateur est connecté en série à l'élément bobiné périphérique 30' du deuxième supercondensateur, et
- l'élément bobiné intermédiaire 20 du premier supercondensateur est connecté en série à l'élément bobiné intermédiaire 20' du deuxième supercondensateur.

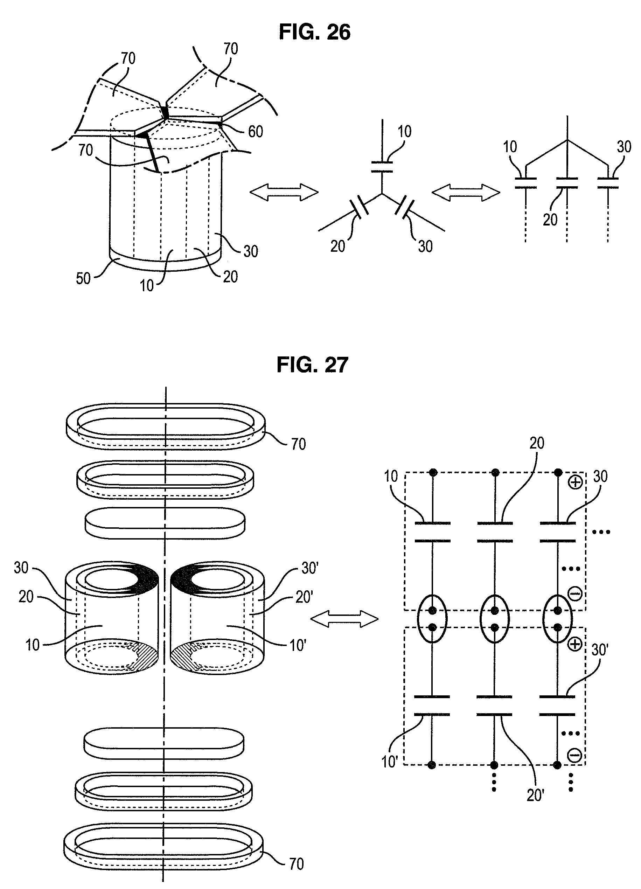

L'avantage de ce montage est que la connexion électrique des deux supercondensateurs ne nécessite pas l'utilisation de barrette de connexion. Il est bien évident que dans le cas de la connexion électrique de deux supercondensateurs adjacents, le même montage peut être réalisé en utilisant des barrettes de connexion particulières (telle que la barrette de connexion illustrée à la figure 16), comme illustré à la figure 26.

En référence à la figure 27, on a illustré un mode de réalisation dans lequel les éléments bobinés successifs d'un supercondensateur sont connectés de sorte à former un montage en étoile.

Plus spécifiquement, la base inférieure du supercondensateur est coiffée d'un couvercle conducteur sur toute sa surface, et la base supérieure du supercondensateur est coiffée d'un couvercle du type illustré à la figure 13 comprenant trois portions de disque connectées à un élément bobiné respectif du supercondensateur. Des barrettes de connexion du type décrit en référence à la figure 14 sont utilisées pour connecter les éléments bobinés du supercondensateur aux éléments bobinés d'autres supercondensateurs adjacents.

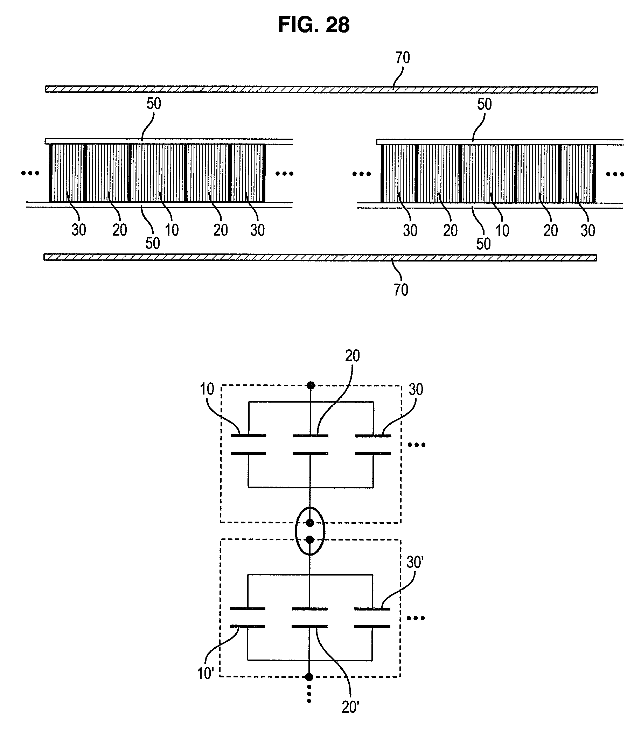

En référence à la figure 28, on a enfin illustré un exemple de montage dans lequel deux supercondensateurs sont connectés électriquement en série, les éléments bobinés de chaque supercondensateur étant connectés en parallèle.

Plus spécifiquement, les bases de chaque supercondensateur sont coiffées de couvercles conducteurs sur toute leur surface et sont connectées par des barrettes de liaison conductrices sur toute leur surface.

Les supercondensateurs selon l'invention permettent donc la réalisation d'un grand nombre de montages électriques de manière beaucoup plus ergonomique que les supercondensateurs de l'art antérieur.

Le lecteur aura compris que de nombreuses modifications peuvent être apportées supercondensateur décrit précédemment sans sortir matériellement des nouveaux enseignements et des avantages décrits ici.

Par conséquent, toutes les modifications de ce type sont destinées à être incorporées à l'intérieur de la portée du supercondensateur tel que défini dans les revendications jointes.

Ce type de conception d'élément peut trouver toute son application également pour des batteries ou des piles de toutes natures (Li-Ion, Lithium Polymère, Ni-Cd, Ni-MH), ou même encore des piles à combustibles.

Le supercondensateur selon l'invention présente de nombreux avantages :

- pour un supercondensateur selon l'invention, à énergie volumique identique à celle de 2 supercondensateurs standards, on peut appliquer une tension inférieure et donc limiter très fortement la création de gaz et donc accroitre de façon très avantageuse la durée de vie,
- le volume interne d'un supercondensateur selon l'invention peut être avantageusement supérieur, par montage, au volume interne de deux supercondensateurs standards associés. Dans ce cas, la durée de vie sera également accrue.

Enfin, dans un module comprenant une pluralité de supercondensateurs connectés les uns aux autres, au moins la moitié de la résistance série du module est une résistance de connectique entre les bobines et les couvercles. Dans un module comprenant une pluralité de supercondensateurs selon l'invention, la résistance série du module est fortement diminuée, en raison de la réduction du nombre de jonctions nécessaires entre couvercle et bobine par rapport à un module comprenant une pluralité de supercondensateurs standards.

## Revendications

1. Supercondensateur à double couche électrochimique, comprenant au moins deux complexes (2, 3) et au moins un séparateur (4) entre les deux complexes (2, 3), chaque complexe comprenant un collecteur de courant et au moins une électrode, les complexes (2, 3) et le séparateur (4) étant enroulés ensemble en spires selon un axe d'enroulement de manière à former un élément bobiné (10), ce supercondensateur comprenant en outre au moins un autre complexe (1) et au moins un autre séparateur (4), l'autre complexe (1) et l'autre séparateur (4) étant enroulés ensemble en spires autour de l'élément bobiné (10) de manière à former au moins un élément bobiné consécutif (20), **caractérisé en ce que** ces éléments bobinés successifs (10, 20) sont séparés par un espace isolant électronique de largeur d selon une direction perpendiculaire à l'axe d'enroulement.

2. Supercondensateur selon la revendication 1, **caractérisé en ce qu'**un complexe (3) du supercondensateur est commun aux deux éléments bobinés successifs (10, 20).

3. Supercondensateur selon la revendication 1, **caractérisé en ce que** le supercondensateur comprend en outre au moins un deuxième autre complexe (3b), les autres complexes (3a, 3b) et l'autre séparateur (4) étant enroulés ensemble en spires autour de l'élément bobiné (10) de manière à former l'élément bobiné consécutif (20).

4. Supercondensateur selon l'une des revendications 1 à 3, **caractérisé en ce que** l'espace isolant électronique est constitué par un frettage (40) formé d'au moins un tour de matériau isolant diélectrique.

5. Supercondensateur selon la revendication 1 ou 2, dans lequel l'espace isolant électronique est constitué par une distance q séparant au moins un des complexes (2) du premier élément bobiné (10) d'au moins un complexe (1) du deuxième élément bobiné (20).

6. Supercondensateur selon la revendication 5, dans lequel la distance q doit être au moins égale à 1 mm.

7. Supercondensateur selon l'une des revendications 1 à 6, **caractérisé en ce que** les séparateurs (4) sont continus de sorte que le supercondensateur comporte un séparateur unique commun aux différents éléments bobinés (10, 20, 30) et faisant office de frettage (40) entre les différents éléments bobinés (10, 20, 30).

8. Supercondensateur selon l'une des revendications 1 à 7, **caractérisé en ce que** la hauteur de chaque élément bobiné (10, 20, 30) est constante.

9. Supercondensateur selon l'une des revendications 1 à 7, **caractérisé en ce que** les éléments bobinés (10, 20, 30) présentent des hauteurs différentes.

10. Supercondensateur selon l'une des revendications 1 à 9, **caractérisé en ce que** les éléments bobinés (10, 20, 30) sont décalés les uns par rapport aux autres selon leur axe longitudinal (Z).

11. Supercondensateur selon l'une des revendications 1 à 10, **caractérisé en ce que** les éléments bobinés (10, 20, 30) sont connectés électriquement par un premier couvercle (50) conducteur sur toute sa surface, ledit couvercle (50) étant disposé sur une des faces de base des éléments bobinés (10, 20, 30).

12. Supercondensateur selon la revendication 11, **caractérisé en ce que** le premier couvercle (50) présente une section transversale crénelée.

13. Supercondensateur selon la revendication 11, **caractérisé en ce que** le premier couvercle (50) s'étend sensiblement dans un plan.

14. Supercondensateur selon l'une des revendications 10 à 13, **caractérisé en ce que** les éléments bobinés (10, 20, 30) sont connectés électriquement par un deuxième couvercle (50) conducteur sur toute sa surface, ledit couvercle (50) étant disposé sur l'autre des faces de base des éléments bobinés (10, 20, 30) de sorte à relier les éléments bobinés (10, 20, 30) en parallèle.

15. Supercondensateur selon l'une des revendications 10 à 13, **caractérisé en ce que** les éléments bobinés (10, 20, 30) sont connectés électriquement par un deuxième couvercle (50) conducteur comprenant des portions conductrices électriquement (S1, S2, S3), les portions conductrices (S1, S2, S3) étant séparées les unes des autres par des portions isolantes électriquement (60), chaque portion conductrice (S1, S2, S3) étant respectivement en contact électrique avec un élément bobiné (10, 20, 30) de sorte à relier en série les éléments bobinés (10, 20, 30).

16. Supercondensateur d'énergie selon la revendication 15, **caractérisé en ce qu'**une des portions conductrices électriquement (S1) est en forme de disque, et les autres (S2, S3) portions conductrices électriquement sont en forme de couronne, les portions conductrices (S1, S2, S3) étant séparées les unes des autres par des portions isolantes électriquement (60) en forme de couronne.

17. Supercondensateur d'énergie selon l'une des revendications 14 à 16, **caractérisé en ce que** le deuxième couvercle (50) s'étend globalement dans un plan.

18. Supercondensateur selon l'une des revendications 14 à 16, **caractérisé en ce que** le deuxième couvercle (50) présente une section transversale crénelée.

19. Supercondensateur d'énergie selon la revendication 15, **caractérisé en ce que** chaque portion conductrice (S1, S2, S3) est en forme de portion de disque, les portions de disques (S1, S2, S3) étant séparées les unes des autres par des portions isolantes radiales (60).

20. Supercondensateur selon l'une des revendications 4 à 19, **caractérisé en ce que** la hauteur du frettage (40) est comprise entre la hauteur de matière active du premier élément bobiné (10) et la hauteur totale dudit premier élément bobiné (10).

21. Supercondensateur selon l'une des revendications 1 à 19, **caractérisé en ce que** les électrodes (12, 13, 22, 23, 32, 33) des complexes (1, 2, 3a, 3b) des éléments bobinés (10, 20, 30) sont de longueurs différentes.

22. Module **caractérisé en ce qu'**il comprend un boîtier dans lequel est disposé au moins un supercondensateur selon l'une des revendications 1 à 21.

**Patentansprüche**

1. Superkondensator mit doppelter elektrochemischer Schicht, umfassend mindestens zwei Komplexe (2, 3) und mindestens einen Separator (4) zwischen den zwei Komplexen (2, 3), wobei jeder Komplex einen Stromsammler und mindestens eine Elektrode umfasst, wobei die Komplexe (2, 3) und der Separator (4) gemeinsam in Windungen gemäß einer Wickelachse derart gewickelt sind, dass ein Wickelelement (10) gebildet wird, wobei dieser Superkondensator ferner mindestens einen anderen Komplex (1) und mindestens einen anderen Separator (4) umfasst, wobei der andere Komplex (1) und der andere Separator (4) gemeinsam in Windungen um das Wickelelement (10) derart gewickelt sind, dass mindestens ein nachfolgendes Wickelelement (20) gebildet wird, **dadurch gekennzeichnet, dass** diese aufeinanderfolgenden Wickelelemente (10, 20) mittels eines elektronisch isolierenden Raums mit der Breite d gemäß einer zur Wickelachse senkrechten Richtung getrennt sind.

2. Superkondensator nach Anspruch 1, **dadurch gekennzeichnet, dass** ein Komplex (3) des Superkondensators den zwei aufeinanderfolgenden Wickelelementen (10, 20) gemeinsam ist.

3. Superkondensator nach Anspruch 1, **dadurch gekennzeichnet, dass** der Superkondensator ferner mindestens einen zweiten anderen Komplex (3b) umfasst, wobei die anderen Komplexe (3a, 3b) und die anderen Separator (4) gemeinsam in Windungen um das Wickelelement (10) derart gewickelt sind, um das nachfolgende Wickelelement (20) zu bilden.

4. Superkondensator nach einem der Ansprüche 1 bis 3, **dadurch gekennzeichnet, dass** der elektronisch isolierende Raum mittels einer Armierung (40) gebildet ist, die von mindestens Lage dielektrisch isolierenden Materials gebildet ist.

5. Superkondensator nach Anspruch 1 oder 2, wobei der elektronisch isolierende Raum von einem Abstand q gebildet ist, der mindestens einen der Komplexe (2) des ersten Wickelelements (10) von mindestens einem Komplex (1) des zweiten Wickelelements (20) trennt.

6.  Superkondensator nach Anspruch 5, wobei der Abstand q mindestens gleich 1 mm betragen muss.

7.  Superkondensator nach einem der Ansprüche 1 bis 6, **dadurch gekennzeichnet, dass** die Separatoren (4) derart kontinuierlich sind, dass der Superkondensator einen einzigen Separator aufweist, der den verschiedenen Wickelelementen (10, 20, 30) gemeinsam ist und als Armierung (40) zwischen den verschiedenen Wickelelementen (10, 20, 30) dient.

8.  Superkondensator nach einem der Ansprüche 1 bis 7, **dadurch gekennzeichnet, dass** die Höhe jedes Wickelelements (10, 20, 30) konstant ist.

9.  Superkondensator nach einem der Ansprüche 1 bis 7, **dadurch gekennzeichnet, dass** die Wickelelemente (10, 20, 30) unterschiedliche Höhen aufweisen.

10. Superkondensator nach einem der Ansprüche 1 bis 9, **dadurch gekennzeichnet, dass** die Wickelelemente (10, 20, 30) gemäß ihrer Längsachse (Z) zueinander versetzt sind.

11. Superkondensator nach einem der Ansprüche 1 bis 10, **dadurch gekennzeichnet, dass** die Wickelelemente (10, 20, 30) mittels eines ersten, über seine gesamte Fläche leitenden Deckels (50) elektrisch verbunden sind, wobei der Deckel (50) auf einer der Basisflächen der Wickelelemente (10, 20, 30) angeordnet ist.

12. Superkondensator nach Anspruch 11, **dadurch gekennzeichnet, dass** der erste Deckel (50) einen gerippten Querschnitt aufweist.

13. Superkondensator nach Anspruch 11, **dadurch gekennzeichnet, dass** sich der erste Deckel (50) etwa in einer Ebene erstreckt.

14. Superkondensator nach einem der Ansprüche 10 bis 13, **dadurch gekennzeichnet, dass** die Wickelelemente (10, 20, 30) mittels eines zweiten, über seine gesamte Fläche leitenden Deckels (50) elektrisch verbunden sind, wobei der Deckel (50) auf der anderen der Basisflächen der Wickelelemente (10, 20, 30) derart angeordnet ist, dass die Wickelelemente (10, 20, 30) parallel verbunden sind.

15. Superkondensator nach einem der Ansprüche 10 bis 13, **dadurch gekennzeichnet, dass** die Wickelelemente (10, 20, 30) mittels eines zweiten leitenden Deckels (50) elektrisch verbunden sind, der elektrisch leitende Abschnitte (S1, S2, S3) umfasst, wobei die leitenden Abschnitte (S1, S2, S3) mittels elektrisch isolierender Abschnitte (60) voneinander getrennt sind, wobei jeder leitende Abschnitt (S1, S2, S3) jeweils mit einem Wickelelement (10, 20, 30) derart im elektrischen Kontakt ist, dass die Wickelelemente (10, 20, 30) in Reihe verbunden sind.

16. Energie-Superkondensator nach Anspruch 15, **dadurch gekennzeichnet, dass** einer (S1) der elektrisch leitenden Abschnitte in Scheibenform ist und die anderen (S2, S3) elektrisch leitenden Abschnitte in Kranzform sind, wobei die leitenden Abschnitte (S1, S2, S3) mittels elektrisch isolierender Abschnitte (60) in Kranzform voneinander getrennt sind.

17. Energie-Superkondensator nach einem der Ansprüche 14 bis 16, **dadurch gekennzeichnet, dass** sich der zweite Deckel (50) allgemein in einer Ebene erstreckt.

18. Superkondensator nach einem der Ansprüche 14 bis 16, **dadurch gekennzeichnet, dass** der zweite Deckel (50) einen gerippten Querschnitt aufweist.

19. Energie-Superkondensator nach Anspruch 15, **dadurch gekennzeichnet, dass** jeder leitende Abschnitt (S1, S2, S3) in Scheibenabschnittsform ist, wobei die Scheibenabschnitte (S1, S2, S3) mittels radialer isolierender Abschnitte (60) voneinander getrennt sind.

20. Superkondensator nach einem der Ansprüche 4 bis 19, **dadurch gekennzeichnet, dass** die Höhe der Armierung (40) zwischen der aktiven Materialhöhe des ersten Wickelelements (10) und der Gesamthöhe des ersten Wickelelements (10) inklusive ist.

21. Superkondensator nach einem der Ansprüche 1 bis 19, **dadurch gekennzeichnet, dass** die Elektroden (12, 13, 22, 23, 32, 33) der Komplexe (1, 2, 3a, 3b) der Wickelelemente (10, 20, 30) unterschiedlicher Längen sind.

22. Modul, **dadurch gekennzeichnet, dass** es ein Gehäuse umfasst, in welchem mindestens ein Superkondensator nach einem der Ansprüche 1 bis 21 angeordnet ist.

**Claims**

1.  A supercapacitor with a double electrochemical layer, comprising at least two complexes (2, 3) and at least one separator (4) between both complexes (2, 3), each complex comprising a current collector and at least one electrode, the complexes (2, 3) and the separator (4) being wound together in turns along a winding axis in order to form a wound element (10), this supercapacitor further comprising at least one other complex (1) and at least one other separator (4), the other complex (1) and the other separator (4) being wound together in turns around the wound element (10) so as to form at least one consecutive wound element (20), **characterized in that** these successive wound elements (10, 20) are separated by an electronic insulating space of width d along a direction perpendicular to the winding axis.

2. The supercapacitor according to claim 1, **characterized in that** a complex (3) of the supercapacitor is common to both successive wound elements (10, 20).

3. The supercapacitor according to claim 1, **characterized in that** the supercapacitor further comprises at least one second other complex (3b), the other complexes (3a, 3b) and the other separator (4) being wound together in turns around the wound element (10) so as to form the consecutive wound element (20).

4. The supercapacitor according to any of claims 1 to 3, **characterized in that** the electronic insulating space is formed by a reinforcement (40) formed with at least one turn of dielectric insulating material.

5. The supercapacitor according to claim 1 or 2, wherein the electronic insulating space is formed by a distance q separating at least one of the complexes (2) of the first wound element (10) of at least one complex (1) of the second wound element (20).

6. The supercapacitor according to claim 5, wherein the distance q should be at least equal to 1 mm.

7. The supercapacitor according to any of claims 1 to 6, **characterized in that** the separators (4) are continuous so that the supercapacitor includes a single separator common to the different wound elements (10, 20, 30) and acting as a reinforcement (40) between the different wound elements (10, 20, 30).

8. The supercapacitor according to any of claims 1 to 7, **characterized in that** the height of each wound element (10, 20, 30) is constant.

9. The supercapacitor according to any of claims 1 to 7, **characterized in that** the wound elements (10, 20, 30) have different heights.

10. The supercapacitor according to any of claims 1 to 9, **characterized in that** the wound elements (10, 20, 30) are shifted relatively to each other along their longitudinal axis (Z).

11. The supercapacitor according to any of claims 1 to 10, **characterized in that** the wound elements (10, 20, 30) are electrically connected through a first conducting lid (50) on the whole of its surface, said lid (50) being positioned on one of the base faces of the wound elements (10, 20, 30).

12. The supercapacitor according to claim 11, **characterized in that** the first lid (50) has an indented cross-section.

13. The supercapacitor according to claim 11, **characterized in that** the first lid (50) substantially extends in a plane.

14. The supercapacitor according to any of claims 10 to 13, **characterized in that** the wound elements (10, 20, 30) are electrically connected through a second conducting lid (50) over the whole of its surface, said lid (50) being positioned on the other one of the base faces of the wound elements (10, 20, 30) so as to connect the wound elements (10, 20, 30) in parallel.

15. The supercapacitor according to any of claims 10 to 13, **characterized in that** the wound elements (10, 20, 30) are electrically connected through a second conducting lid (50) comprising electrically conducting portions (S1, S2, S3), the conducting portions (S1, S2, S3) being separated from each other by electrically insulating portions (60), each conducting portion (S1, S2, S3) being respectively in electric contact with a wound element (10, 20, 30) so as to connect the wound elements (10, 20, 30) in series.

16. The energy supercapacitor according to claim 15, **characterized in that** one (S1) of the electrically conducting portions is disk-shaped, and the other electrically conducting portions (S2, S3) are crown-shaped, the conducting portions (S1, S2, S3) being separated from each other by crown-shaped electrically insulating portions (60).

17. The energy supercapacitor according to any of claims 14 to 16, **characterized in that** the second lid (50) globally extends in a plane.

18. The supercapacitor according to any of claims 14 to 16, **characterized in that** the second lid (50) has an indented cross-section.

19. The energy supercapacitor according to claim 15, **characterized in that** each conducting portion (S1, S2, S3) is in the shape of a disk portion, the disk portions (S1, S2, S3) being separated from each other by radial insulating portions (60).

20. The supercapacitor according to any of claims 4 to 19, **characterized in that** the height of the reinforcement (40) is comprised between the height of active material of the first wound element (10) and the total height of said first wound element (10).

21. The supercapacitor according to any of claims 1 to 19, **characterized in that** the electrodes (12, 13, 22, 23, 32, 33) of the complexes (1, 2, 3a, 3b) of the wound elements (10, 20, 30) are of different lengths.

22. A module **characterized in that** it comprises a casing in which is positioned at least one supercapacitor according to any of claims 1 to 21.

**FIG. 1a**

**FIG. 1b**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

## FIG. 14

## FIG. 15

## FIG. 16

## FIG. 17

FIG. 18

FIG. 19

FIG. 20

FIG. 21

FIG. 22

FIG. 23

**FIG. 24**

**FIG. 25**

# FIG. 26

# FIG. 27

# FIG. 28

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9815962 A

- US 6414838 B